# EUROPEAN PATENT APPLICATION

(11) **EP 4 667 440 A1**
(43) Date of publication of application: **24.12.2025**
(21) Application number: 24182631.2
(22) Date of filing: 17.06.2024
(51) Int. Cl.: C04B 35/565, B32B 18/00, B33Y 10/00, B33Y 70/00, B33Y 80/00, C04B 35/632, C04B 35/634, C04B 35/636

(54) **A 3D PRINT METHOD FOR PROVIDING A SIC CERAMIC PREFORM USING SIC PARTICLES WITH A SPECIFIC ROUNDNESS**

(71) Applicant: CeramTec GmbH, 73207 Plochingen (DE)
(72) Inventor: KEIM, Martin, 74369 Löchgau (DE); HETTICH, Pascal, 76137 Karlsruhe (DE); KASCHER, Andreas, 91785 Pleinfeld (DE)
(74) Representative: Maikowski & Ninnemann Patentanwälte Partnerschaft mbB

(57) **Abstract**

The invention relates to the use of SiC particles (grains) in a 3D print method for providing a SiC ceramic preform (green body), wherein the SiC particles (grains) are characterized by
- an average grain size (d₅₀) of 2 to 70 µm, preferably 3 to 65 µm, more preferably 5 to 50 µm, such as 25 to 60 µm, preferably 40 to 55 µm,
- a roundness of > 0.55, preferably > 0.58, more preferably > 0.6 (as described in experimental section ,
- bulk density of > 1.6 g/cm³, preferably > 1.65 g/cm³, more preferably > 1.7 g/cm³, even more preferably > 1.75 g/cm³ (according to DIN EN 725-9 ISO 23145-2).

## Description

The present invention relates to the use of SiC particles (grains) with a specific roundness in a 3D print method for providing a SiC ceramic preform, and a 3D print method for providing a SiC ceramic preform using said SiC particles.

### Description

Ceramic substrates or components are used in different technical areas, such as electronic industries, automotive industry and in medicinal industry.

Ceramic components are obtained in a multistep process, wherein a suitable starting material (such as Al₂O₃, SiC, Si₃N₄ or mixtures thereof) is provided as a powder. The powder is shaped into a desired form by pressing, moulding or extrusion providing a preform or a so called "green body".

This involves compacting the powder particles (which are optionally mixed with an organic binder) and moulding them into a coherent shape that has sufficient strength for subsequent handling. Depending on the requirements, this moulded, unfired powder body (green compact or green body) can still be processed cost-effectively before firing, as the corresponding work steps after firing are much more complex.

With the various moulding processes, care must be taken to ensure that there are no noticeable density gradients and textures in the green body, as these may be intensified during firing, lead to deformation and cause internal mechanical stresses. The selection of a suitable moulding process is usually based on economic aspects (rational production).

In addition to the ceramic powder mixtures (including the permanent additives), the green bodies produced using the original shaping processes of casting, plastic moulding and pressing usually also contain moisture and mostly organic liquefying, plasticising and binding agents or other auxiliary materials. All components that are volatile at high temperatures, i.e. evaporate or burn, must be removed from the ceramic green body before firing, which requires special care so that they can leave the body without being damaged.

Recently, 3D print methods were developed as an alternative for providing such preforms, as for example described in WO 2018/206250 A1. However, a disadvantage of the printing method is that SiSiC compounds obtained from 3D printed SiC preforms have a low density, coarser SiC grain size and a higher Si content. These factors reduce the mechanical properties and have an influence on the electrical properties.

WO 2019/063833 A1 discloses a method for providing a ceramic component containing silicon carbide (SiC) with the steps of a) providing a green body based on SiC which has been produced by means of a 3D-printing method, b) impregnating the green body with a solution selected from the group consisting of a sugar solution, a starch solution or a cellulose solution, or a resin system comprising a mixture containing at least one resin, at least one solvent and at least one curing agent, the at least one resin and the at least one solvent being different, c) drying or curing the impregnated green body, d) carbonising the dried or cured green body, wherein a fine-pored, foam-like carbon skeleton is produced from the dried solution or a fine-pored, sponge-like carbon skeleton is produced from the cured resin system, e) siliconising the carbonised green body by infiltrating with liquid silicon. In the event of siliconisation of such a green body, the carbon skeleton is converted into silicon carbide and the pores of the green body are filled with silicon.. As a result of this filling of the pores, the proportion of relatively large lakes or regions of free silicon is significantly reduced. The free silicon is therefore no longer present in the form of large lakes or regions, and instead silicon carbide structures are present in these pores. The presence of these silicon carbide structures which fill the pores leads to a higher chemical stability and to a greater temperature resistance of the ceramic component and to improved mechanical properties. In any case, this method requires the application of an impregnation solution as an additional process step.

Thus, it was an object of the invention to provide SiC preforms (green bodies) obtained by 3D print that have a high (green) density and subsequently SiSiC compounds with a high final density without the requirement of an impregnation step. This may reduce the gap in material properties between the 3D material and conventional material.

This object was solved by using SiC particles with a specific roundness in a 3D print method as described in the claims.

Accordingly, SiC particles (grains) are used in a 3D print method for providing a SiC ceramic preform (green body), wherein the SiC particles (grains) are characterized by
- an average grain size (d₅₀) of 2 to 70 µm, preferably 3 to 65 µm, more preferably 5 to 50 µm, such as 25 to 60 µm, preferably 40 to 55 µm,
- a roundness of > 0.55, preferably > 0.58, more preferably > 0.6 (as described in experimental section),
- bulk density of > 1.6 g/cm³, preferably > 1.65 g/cm³, more preferably > 1.7 g/cm³, even more preferably > 1.75 g/cm³ (according to DIN EN 725-9 ISO 23145-2).

The term "d₅₀" is understood to mean that 50% of the particles are smaller than the specified value. The d₅₀ value was determined with the aid of a method based on laser granulometry (ISO 13320).

By using the particularly round grain or particle a significantly higher bulk density can be achieved compared to standard grain with a roundness of less than 0.55. For example, the bulk density of standard grain is about 1.55 g/cm³, whereas the bulk density of the round grain can be more than 1.75 g/cm³, e.g. 1.79 g/cm³.

The modality and distribution range for the round particles is less than 0.55, preferably less than 0.52, more preferably less than 0.5, even more preferably less than 0.48, for example 0.46. For comparison: the modality of standard particles is about 0.6.

The higher bulk density results in a density increase of the SiC preform (or green body) obtained by 3D print using said round particles.

For example, as will be explained further below in more detail, when using the SiC particles with a roundness of > 0.55, preferably > 0.58, more preferably > 0.6 (as described in experimental section),), SiC ceramic preform (green body) with a density of 1.59 g/cm³ is obtained. In contrast, when using the SiC particles with a roundness of less than 0.55, such as 0.5, a SiC ceramic preform (green body) with a density of 1.46 g/cm³ is obtained; i.e increase of density by about 10% in the SiC preform (green body) is achieved using the rounder particles. Such increase in green density of 10% is currently only possible by means of soot impregnation, the use of multimodal printing powder or inks consisting of liquid resin containing SiC particles.

The SiC particles used according to the invention may be obtained in different ways.

In one embodiment the SiC particles are obtained from SiC waste products. The SiC particles and methods for obtaining the same are described in WO 2023/217706 A1.

Accordingly, SiC waste products are crushed by mixing, grinding, e.g. autogenous grinding, or by using eddy currents and/or ultrasound or by grinding, hammering, crushing or by means of electrical discharges or shock waves. The energy input during the mechanical stressing and comminution of SiC waste products into SiC particles is between 0.1 and 5 MJ/kg.

The mechanical comminution of the SiC waste products can take place before and/or after a temperature treatment under vacuum or non-oxidising atmosphere at temperatures of 1400 to 2600°C.

After one of the last treatment under mechanical stress of the SiC particles, a physical separation of the SiC particles into fractions can be carried out. The separation according to particle size and/or particle shape can be carried out by sieving, sifting and/or cyclone processes. Separation according to the density of the particles can be carried out by flotation and/or cyclone process.

The SiC particles obtained in this way consist of at least 85 Ma% silicon carbide and have a density of 2.89 to 3.20 g/cm³, a compressive strength of > 2500 MPa, a proportion of < 5% of pores with an equivalent diameter of > 1 00 1-1m and a proportion of open porosity of < 10%.

The SiC particles according to WO 2023/217706 A1 have particle sizes of greater than or equal to 2 mm and an irregular shape with a roundness of 0.5 to 0.8.

The SiC particles used according to the invention with an average grain size between 2-70 µm and a roundness of > 0.55 are subsequently obtained from the particle mixture by appropriate fractionation, for example by sieving.

As mentioned, the round SiC particles are used in 3D print method for obtaining a SiC preform (SiC green body).

Thus, in a further aspect of the invention a method for obtaining a SiC preform (green body) by 3D print is provided, wherein the method comprises the steps of:
- Providing at least one first layer of a composition (powdery composition) comprising at least 80 wt%, preferably at least 85wt%, more preferably at least 90wt% (based on the overall weight of the composition) of SiC particles having
   ∘ an average grain size (d₅₀) of 2 to 70 µm, preferably 3 to 65 µm, more preferably 5 to 50 µm, such as 25 to 60 µm, preferably 40 to 55 µm,
   ∘ a roundness of > 0.55, preferably > 0.58, more preferably > 0.6 (as described in the experimental section),
   ∘ bulk density of > 1.6 g/cm³, preferably > 1.65 g/cm³, more preferably > 1.7 g/cm³, even more preferably > 1.75 g/cm³ (according to DIN EN 725-9 ISO 23145-2), and
- applying at least one binder to the at least one first layer of the SiC particles containing composition and consolidating the at least one first layer, in particular chemical, thermal and/or light induced consolidating the at least one first layer.

These steps are repeated until the desired form of the component is produced, the individual steps being matched to the desired form of the component.

Thus, in an embodiment of the 3D print at least one second layer of the SiC particles containing composition is applied onto the consolidated first layer; followed by applying a binder to the at least second layer of the SiC particles containing composition and chemical, thermal and/or light induced consolidating the at least second layer according to the required next layer of the SiC preform.

The binder may be applied to the SiC powder layer, for example, by means of a print head. The binder should preferably wet the powder well so that the binder material is distributed homogeneously. Consolidation of the printed areas in the layer can be done either by removing the volatile parts of the fixing component or by chemical, thermal and/or light-induced cross-linking (e.g. with an IR or UV lamp). After their consolidation a further layer of SiC powder is applied. The binder is applied and consolidated (i.e. at least partially cured or dried) resulting in the green body having the desired form of the component.

Immediately after the curing or drying of the binder, the green body is still surrounded by a powder bulk formed of loose particles of the powdery composition. The green body must therefore be removed from the powder bulk or separated from the loose, non-solidified particles. This is also referred to in the literature relating to 3D printing as an "unpacking" of the printed component. The unpacking of the green body may be followed by a (precision) cleaning of the green body in order to remove adhering particle residues. The unpacking may be performed for example by sucking up the loose particles using a high-performance sucker. The manner in which the unpacking is performed, however, is not particularly limited, and all known methods may be employed.

In an embodiment of the present method, the composition used as starting material comprises 80- 100 wt% , preferably 80 - 98 wt%, more preferably 85- 95 wt%, even more preferably 90-93 wt% of SiC particles and 0-20 wt%, preferably 2-20 wt%, more preferably 5-15 wt%, even more preferably 7 - 10 wt% of Carbon.

Carbon, for example carbon black or graphite, can be added to the SiC powder before the preforms are produced, so that the carbon content required for the secondary SiC is already introduced.

It is preferred, if no further additives are present in the starting material used for the 3D print.

In a further embodiment of the present 3D printing method the at least one first composition layer (and preferably each subsequent composition layer) has a layer thickness between 10 and 250 µm, preferably between 50 and 200 µm, more preferably between 80 and 150 µm.

The binder used in the 3D printing process can be prepared by chemical, thermal and/or light-induced cross-linking, for example by irradiation of large areas or points with an IR or UV lamp. UV curing components can be radical or cationic curing UV systems or a mixture of both e.g. acrylates, epoxies, enol ethers, vinyls. Thermally curing binder may be a component that is dried over a heat source and/or reaction. Exemplary components are phenolic resins, furan resins, epoxy resins, graphite resins, starch, sugar or cellulose solutions. The binder can also be on an inorganic basis, such as water glass. 3D printing preferably uses a binder that forms a carbon residue after pyrolysis ("coking"). This carbon reacts with silicon to form secondary silicon carbide.

The choice of the binder for production of the 3D-printed green body is not particularly limited. Suitable binders are, for example, phenol resins, furan resins, polyimides, celluloses, starches, sugars, silicates, silicon-containing polymers, water glass, pitch, polyacrylonitrile (PAN) or any mixtures thereof. Solutions of the aforesaid binders are also included herein.

The binders constituted by phenol resins, furan resins or polyimides are resins and polymers with a relatively high carbon yield. They belong to the class of binders that are transferred by curing into a non-meltable binder system and with siliconisation are converted largely into SiC.

Celluloses, starches or sugars, preferably present in the form of a solution, may also be used, as binders. These binders only have to be dried, and the carbon residue created with the carbonisation and siliconization is largely converted into SiC.

The use of silicates, water glass or silicon-containing polymers as binder, preferably present in the form of a solution, also has the advantage that these binders also only have to be cured. They form SiC during the carbonisation.

Preferred binders are phenolic resins, such as phenolic resin novalaks with e.g. hexamethylenetetramine as hardener. Another preferred binder are furan resins.

The amount of binder used in the 3D printed SiC preform (green body) is 1 .0 to 30.0 wt. %, preferably 5.0 to 25.0 wt. %, more preferably 10.0 to 20.0 wt. %, in relation to the total weight of the green body.

As mentioned above, due to the use of SiC particles with a specific roundness there is no need to apply an impregnation solution to the printed SiC preform before curing, i.e the impregnation step can be omitted.

In accordance with a further preferred embodiment of the present invention, the green body may be cured in a further step at room temperature or at an elevated temperature.

The curing at room temperature is preferred, since there is no need for the temperature application, thus constituting a more economical method step. This curing at room temperature is made possible since the resin system comprises a curing agent.

Furthermore, the speed of the curing may be controlled in a targeted manner by the proportion of curing agent that is added. It is sought here to achieve a curing time in a range of from 10 minutes to 10 hours. This adjustable curing time is directed here towards the desired processing times.

After the curing, the used resin is not meltable and therefore may be carbonised. A further advantage of the curing at room temperature lies in the fact that a temperature application leads to a temporary reduction of the resin viscosity and therefore to the discharge of the resin from the pores of the green body. Such a discharge on the one hand results in a loss of resin, and on the other hand the green body may lose its form since parts of the resin adhere undesirably to the lower part of the green body.

The SiC preform (green body) obtained by 3D-print and subsequent drying and curing (before carbonization and infiltration with Si) has a density of > 1.5 g/cm³, preferably of > 1.53 g/cm³, more preferably of > 1.55 g/cm3, such as in a range between 1.5 and 3.0 g/cm³, preferably between 1.53 and 2.5 g/cm³, more preferably between 1.53 and 2.0 g/cm³, even more preferably between 1.55 and 1.8 g/cm³.

The density is measured by the Archimedes method using mercury as liquid according to DIN EN 623-2; ISO 18754.

In accordance with a still further preferred embodiment of the present invention, the dried or cured SiC preform (green body) is carbonised.

The term "carbonisation" is understood to mean the thermal conversion of the organic binder system, such as resin system, contained by the green body into carbon. The carbonisation may occur by heating to temperatures in a range of from 500°C.-1100° C., preferably from 800° C. to 1000° C., in an inert gas atmosphere (for example in an argon or nitrogen atmosphere) with subsequent hold time. In view of the solvent contained in the pores, it is advantageous if the heating to the carbonisation temperature is performed gently, since cracking products are expelled. If this expulsion is not performed slowly or gently, the green body may explode.

In a further preferred embodiment, the carbonised SiC preform (green body) is infiltrated with liquid silicon in a further step and a SiSiC material is formed.

In the event of siliconisation of such a green body, the pores of the green body are filled with silicon. The step of silconisation increases the density of the SiSiC material. In the present case using SiC particles with a specific roundness a final density of up to 2.75 g/cm³, preferably of up to 2.79 g/cm³ or higher upto 3.1 g/cm³ may be achieved.

The infiltration of the SiC preform (green body) with liquid for obtaining SiSiC material can be achieved in different ways.

In one embodiment, the SiC preform (green body) is placed on silicon and/or a silicon alloy, such as a silicon bed, and is subsequently heated in a vacuum or inert atmosphere to a temperature above the melting temperature of Si and / or Si alloys, i.e. to temperatures of more than 1400°C. The molten silicon is sucked into the green body by capillary forces and fills the pores of the green body with silicon.

The component obtained from a SiC preform (green body) in a 3D print method using the round particles shows good properties. In particular, the combination of roundness and distribution width of the particles still allows for good component quality.

This was surprising since a person skilled in the art would rather assume that particles with the surface structure of natural quartz sand with corners and edges are preferable, since such particles can interlock better and are less susceptible to mutual displacement.

The invention is now explained in more detail with reference to the examples and figures. It shows:
- Figure 1 A: a spectroscopic view of the SiC particles used according to the invention;
- Figure 1B: a spectroscopic view of standard SiC particles;
- Figure 2A: a spectroscopic view of a green body obtained with the SiC particles used according to the invention;
- Figure 2B: a spectroscopic view of a green body obtained with standard SiC particles.

### Example 1:

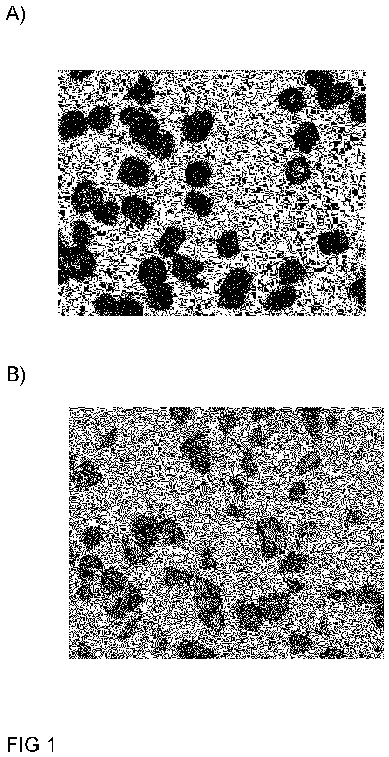

The SiC particles used according to the invention are illustrated in Fig 1A, a 20x enlarged transmitted light image. For comparison, Fig 1B shows standard SiC particles (as described in "Silicon Carbide Ceramics: Structure, Properties and Manufacturing" by Andrew J. Ruys, 2023, Elsevier Series of Advanced Ceramic Materials, ; classified according to ISO 6344).

The roundness of the SiC particles was determined as follows:
A spatula tip of powder is sprinkled onto a glass slide and viewed under a microscope using transmitted light. An area should be selected in which the grains have practically no contact with each other and a very strong black/white contrast is achieved. The resulting image is then analyzed using the Stream software (Olympus) with the "count and measure" function. The particles are recognized on the basis of an intensity threshold value and the desired property is then calculated.

Bulk density was measured according to DIN EN 725-9, ISO 23145-2:
The powder flows freely through a funnel into a defined cylinder until the powder protrudes. The excess powder is then scraped off and the powder in the cylinder is weighed, from which the bulk density is calculated using the volume of the cylinder.

The properties of SiC particles according to the invention and standard SiC particles are summarized in the following Table 1. The average particle size is according to F240, specifically d10 35-37 µm, d50 48-51µm, d90 57-69µm (obtained by laser diffraction)

**Table 1**

| | Form factor | Aspect ratio | Elongation | Roundness | Number | Bulk density [g/cm3] |
|---|---|---|---|---|---|---|
| SiC particles according to the invention (Fig 1A) | 0,73 | 1,31 | 1,33 | 0,61 | 1768 | 1.77 |
| Standard (Fig 1B) | 0,71 | 1,47 | 1,50 | **0,50** | 1181 | 1.55 |

### Example 2: Green body

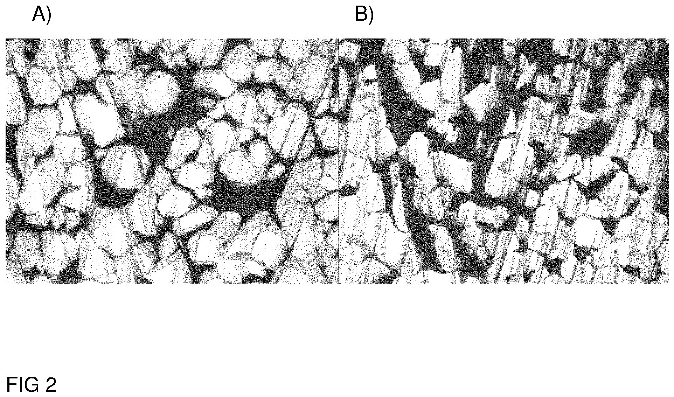

The green body obtained when using the SiC particles to the invention is shown in Fig 2A, a 20x enlarged light image. For comparison, Fig 2B shows a green body obtained when using standard SiC particles.

When comparing the green bodies of Fig. 2A and Fig. 2B it is apparent that the packaging density is increased in the green body according to the invention (Fig. 2A).

The green body based on silicon carbide may be produced as follows:
A silicon carbide with grain size F240 (d50 45 µm), roundness of 0.61 and bulk density of 1.79 g/cm3 was used.

This was processed by means of a 3D printing powder bed machine. A doctor blade unit applied a silicon carbide powder layer (approximately 0.15 mm high) to a planar powder bed, and a kind of inkjet printing unit printed a water based phenol resin solution onto the silicon carbide powder bed in accordance with the desired component geometry. The printing table was then lowered by the layer thickness, and another layer of silicon carbide was applied, and phenol resin was again printed on locally. By repeating the procedure, cuboidal test specimens for example with dimensions of 60mm (length)×10 mm (width)× 10 mm (height) were constructed. As soon as the complete "component" was printed, the powder bed was introduced into a furnace preheated to 140° C and was held there for approximately 6 hours, the phenol resin having formed a fully cured and dimensionally stable green body. The excess silicon carbide powder was then sucked away after the cooling and removed from the green body.

### Density of green body: 1.59 g/cm3

Measurement using the buoyancy principle (according to ISO 18754) but with mercury as the liquid. Measurement is carried out on the part that is removed directly from the printer after printing and consists only of SiC and the binder of the printing process.

### Example 3 Silconisation

The SiC preform (green body) is placed on silicon and/or a silicon alloy, such as a silicon bed, and is subsequently heated in a vacuum or inert atmosphere to a temperature above the melting temperature of Si and / or Si alloys, i.e. to temperatures of more than 1400°C. The molten silicon is sucked into the green body by capillary forces and fills the pores of the green body with silicon.

## Claims

1. Use of SiC particles (grains) in a 3D print method for providing a SiC ceramic preform (green body), wherein the SiC particles (grains) are **characterized by**
- an average grain size (d₅₀) of 2 to 70 µm, preferably 3 to 65 µm, more preferably 5 to 50 µm, such as 25 to 60 µm, preferably 40 to 55 µm,
- a roundness of > 0.55, preferably > 0.58, more preferably > 0.6 (as described in experimental section ),
- bulk density of > 1.6 g/cm³, preferably > 1.65 g/cm³, more preferably > 1.7 g/cm³, even more preferably > 1.75 g/cm³ (according to DIN EN 725-9 ISO 23145-2).

2. Method for obtaining a SiC preform (green body) by 3D print comprising the steps of:
- Providing at least one first layer of a composition (powdery composition) comprising at least 80 wt%, preferably at least 85wt%, more preferably at least 90wt% (based on the overall weight of the composition) of SiC particles having
∘ an average grain size (d₅₀) of 2 to 70 µm, preferably 3 to 65 µm, more preferably 5 to 50 µm, such as 25 to 60 µm, preferably 40 to 55 µm,
∘ a roundness of > 0.55, preferably > 0.58, more preferably > 0.6 (as described in experimental section),
∘ bulk density of > 1.6 g/cm³, preferably > 1.65 g/cm³, more preferably > 1.7 g/cm³, even more preferably > 1.75 g/cm³ (according to DIN EN 725-9 ISO 23145-2), and
- applying at least one binder to the at least one first layer of the SiC particles containing composition and thermal and/or light induced consolidating the at least one first layer.

3. Method according to claim 2, **characterized in that** the composition comprises 80-100 wt%, preferably 80 - 98 wt%, more preferably 85- 95 wt%, even more preferably 90-93 wt% of SiC particles and 0-20 wt%, preferably 2-20 wt%, more preferably 5 - 15 wt%, even more preferably 7-10 wt% of Carbon.

4. Method according to one of the claims 2-3, **characterized in that** the at least one first composition layer (and preferably each subsequent composition layer) has a layer thickness between 10 and 250 µm, preferably between 50 and 200 µm, more preferably between 80 and 150 µm.

5. Method according to one of the claims 2-4, **characterized in that** the at least one binder is selected from one of acrylates, epoxies, enol ethers, vinyls, phenolic resins, furan resins, epoxy resins, graphite resins, starch, sugar or cellulose solutions.

6. Method according to one of the claims 2-5, **characterized in that** the amount of binder in the 3D printed SiC preform (green body) is 1.0 to 30.0 wt. %, preferably 5.0 to 25.0 wt. %, more preferably 10.0 to 20.0 wt. %, in relation to the total weight of the green body.

7. Method according to one of the claims 2-6, **characterized in that** the SiC preform (green body) is dried or cured.

8. Method according to one of the claims 2-7, **characterized in that** at least one of the SiC preforms (green body) obtained by 3D-print (after drying or curing) has a density > 1.5 g/cm³, preferably > 1.53 g/cm³, more preferably > 1.55 g/cm3, such as in a range between 1.5 and 3.0 g/cm³, preferably between 1.53 and 2.5 g/cm³, more preferably between 1.53 and 2.0 g/cm³, even more preferably between 1.55 and 1.8 g/cm³.

9. Method according to one of the claims 7-8, **characterized in that** the dried or cured SiC preform (green body) is carbonized.

10. Method according to claim 9, **characterized in that** the carbonized SiC preform (green body) is infiltrated with liquid silicon.
